# EUROPÄISCHE PATENTANMELDUNG

(11) **EP 0 658 305 A1**
(43) Veröffentlichungstag der Anmeldung: **21.06.1995**
(21) Anmeldenummer: 94111602.2
(22) Anmeldetag: 26.07.1994
(51) Int. Cl.: A01K 95/00

(54) **Verwendung von Wismut als Beschwerungsmaterial für die Fischerei**

(30) Priorität: 15.12.1993 DE 4342812
(71) Anmelder: Zielowski, Wolfgang, D-82140 Olching (DE)
(72) Erfinder: Zielowski, Wolfgang, D-82140 Olching (DE)
(74) Vertreter: Kern, Ralf M., Dipl.-Ing.

(57) **Zusammenfassung**

Die Erfindung liegt in der Verwendung von Wismut, auch in wenig reiner Form, als umweltverträgliches Gewichts- oder Beschwerungsmaterial in umweltverbundenen Gewässern, insbesondere als Beschwerungskörper für die Fischerei, vorzugsweise in kompakten Materialkörpern.

## Beschreibung

Traditionsgemäß wird in der Fischereiwirtschaft als Beschwerungsmaterial von z.B. Angelgerät, Netzen bzw. ganz allgemein zum Positionieren von Fanggeschirr in der Fischereiwirtschaft metallisches Blei verwendet.

Genauere Analysen dieses Einsatzes von Blei haben jedoch ergeben, daß einem einzelnen durchschnittlich aktiven Angler allein ca. 0,3kg/Jahr an Blei verloren gehen (bei europaweit mind. 6-7 Mio. Anglern) und auf diese Weise ins Umwelt-Wasser gelangen. Überschlägige Berechnungen gehen davon aus, daß - auch durch Fanggeschirr der professionellen Fischereiwirtschaft wie z.B. Fischnetzen, insgesamt in Europa mind. ca. 15-25 t billig zu gewinnendes metallisches Blei in die Fischgewässer gelangen bzw. verloren gehen. Bei derartigen Mengen ist von einer erheblichen Vergiftungsgefahr für die Umwelt auszugehen, zumal sich diese Bleimengen in Fluß-, See- und Küstengewässern konzentrieren und sich aus Gewichtsgründen nicht über die Weltmeere verteilen. Aus dem gleichen Grund ist die in die Umwelt verlorengegangene massive Bleimenge auch dem Angriff durch Boden- bzw. Schlammkorrossionen ausgesetzt, insbesondere auch durch den verstärkten Einfluß sauren Regens.

Es wurde versucht, Steinmaterial oder Stahl- bzw. Eisenkörper als Ersatz für Blei einzusetzen, doch ist deren Formgebung und auch das Durchbohren dieses Materials sehr verarbeitungsauswendig.

Überraschenderweise hat sich zur optimalen Lösung dieses Problems erfindungsgemäß die Verwendung von Wismut, auch in wenig reiner Form, als umweltverträgliches Gewichts- oder Beschwerungsmaterial in umweltverbundenen Gewässern, insbesondere als Beschwerungskörper für die Fischerei, vorzugsweise in kompakten Materialkörpern, erwiesen.

Wismut gehört als sogenanntes Halbmetall zu den seltensten Elementen, wobei sein Anteil an der oberen, 16 km dicken Erdkruste auf nur 2 x 10⁻¹⁴ % geschätzt wird und an 64. Stelle der Liste der Elemente steht, so daß es bisher lediglich aufgrund seiner geringen elektrischen Leitfähigkeit und seines niedrigen Schmelzpunktes für elektrische Sicherungen und seines negativen thermischen Ausdehnungskoeffizienten für Druckstöcke verwendet wurde.

Auch durch die wegen Einsatz von Antibiotika sinkende Nachfrage in der pharmazeutischen und kosmetischen Industrie sind die Einsatzmöglichkeiten von Wismut heutzutage stark eingeschränkt, so daß die vorhandenen, für den Technologien der Vergangenheit erschlossenen Erzvorkommen nur beschränkt nutzbar sind.

Durch die erfindungsgemäße neue Verwendungsmöglichkeit für Wismut ergibt sich einerseits eine neue Nutzungsmöglichkeit solcher Lagerstätten und andererseits der umweltschonende Einsatz von Wismut in der Fischererindustrie.

Dafür bedarf es auch keinerlei hoher Herstellungskosten durch stärkere Reinigung des Materials, denn die bekannte einsatzbehindernde höhere Sprödigkeit unreinen ggf. nicht gesondert elektrolytisch gereinigten Wismuts läßt sich in der erfindungsgemäßen Verwendung als kompakt geformtes Beschwerungsmaterial speziell in der Fischereiwirtschaft ausgleichen.

Auch der extrem niedrige Schmelzpunkt von Wismut wird seiner Verwendung in umwelttemperiertem Wasser gerecht. Vorteilhafterweise wird Wismut im Gegensatz zu Blei in sauerstoffhaltigem Wasser sowie Salzsäure und Schwefelsäure bei normaler Umwelttemperatur nicht angegriffen, wobei gerade letztere Bestandteile des sauren Regens sind. Im übrigen ist von Wismut keinerlei toxische oder akkumulative Wirkung auf die Umwelt bekannt.

Auch kann das insbesondere rein schmelztechnisch oder nur grob gereinigte Wismut auf wirtschaftlichste Weise auch mit dafür kompatiblen anderen Metallen legiert werden.

## Patentansprüche

1. Verwendung von Wismut, auch in wenig reiner Form, als umweltverträgliches Gewichts- oder Beschwerungsmaterial in umweltverbundenen Gewässern, insbesondere als Beschwerungskörper für die Fischerei, vorzugsweise in kompakten Materialkörpern.
